(19)

Europäisches Patentamt
European Patent Office
Office européen des brevets

(11) **EP 2 211 534 A1**

(12) **EUROPEAN PATENT APPLICATION**
published in accordance with Art. 153(4) EPC

(43) Date of publication:
**28.07.2010 Bulletin 2010/30**

(51) Int Cl.:
***H04N 5/225*** (2006.01)

(21) Application number: **07832114.8**

(22) Date of filing: **19.11.2007**

(86) International application number:
**PCT/JP2007/072384**

(87) International publication number:
**WO 2009/066364 (28.05.2009 Gazette 2009/22)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Fujitsu Limited**
**Kawasaki-shi, Kanagawa 211-8588 (JP)**

(72) Inventors:
• **SUENOBU, Nozomi**
 **Kawasaki-shi**
 **Kanagawa 211-8588 (JP)**
• **SEGAWA, Eigo**
 **Kawasaki-shi**
 **Kanagawa 211-8588 (JP)**

(74) Representative: **Delumeau, François Guy et al**
 **Cabinet Beau de Loménie**
 **158, rue de l'Université**
 **75340 Paris Cedex 07 (FR)**

(54) **IMAGING DEVICE, IMAGING METHOD, AND IMAGING PROGRAM**

(57) In an image capturing apparatus (100), an image recognition device (130) detects an object to be monitored and calculates an object luminance and object coordinates by performing a recognition process on the detected object. A control device (140) calculates a position and an illuminance in space where the object exists on the basis of the object luminance and the objet coordinates, calculates a camera parameter on the basis of the calculated position and illuminance and a present camera parameter, and controls the camera parameter of a video image capturing device (120) according to the calculated camera parameter, so that the exposure amount is adjusted.

FIG.4

IMAGE CAPTURING APPARATUS 100

110 ILLUMINATING DEVICE

130 IMAGE RECOGNITION DEVICE

VIDEO IMAGE SIGNAL

120 VIDEO IMAGE CAPTURING DEVICE

OBJECT LUMINANCE, OBJECT COORDINATES

140 CONTROL DEVICE

CONTROL SIGNAL

**Description**

TECHNICAL FIELD

The present invention relates to an image capturing apparatus that detects an object and captures its images, to an image capturing method, and to an image capturing program.

BACKGROUND ART

In conventional image monitoring, an object to be monitored is detected, the detected object is recognized, and characters written on the object are read (see Patent Document 1 and Patent Document 2). In the image monitoring, in order for a high recognition rate (the rate at which objects are successfully indentified), it is necessary to capture images of objects to be recognized with a luminance suitable for recognizing the objects.

Particularly, in outdoor image monitoring, the illuminance environment varies from one moment to the next according to the sunlight, which depends on the weather.
In order for a high recognition rate under such an illuminance environment, it is necessary to adjust the amount of light that is incident on the image capturing apparatus (the amount of exposure) such that images of the object are captured always with a luminance that is suitable for recognizing the object.

With luminance adjustment in conventional image monitoring, even though there are variations over time in illuminance, there is a basic premise that the illuminance distribution in a monitoring area at a certain time is constant. For example, according to Patent Document 1, in order to accurately read characters that are written on a license plate of a vehicle traveling along a road, a camera parameter, such as the aperture of the lens, is controlled such that the luminance of the detected object (the license plate) is a predetermined value.

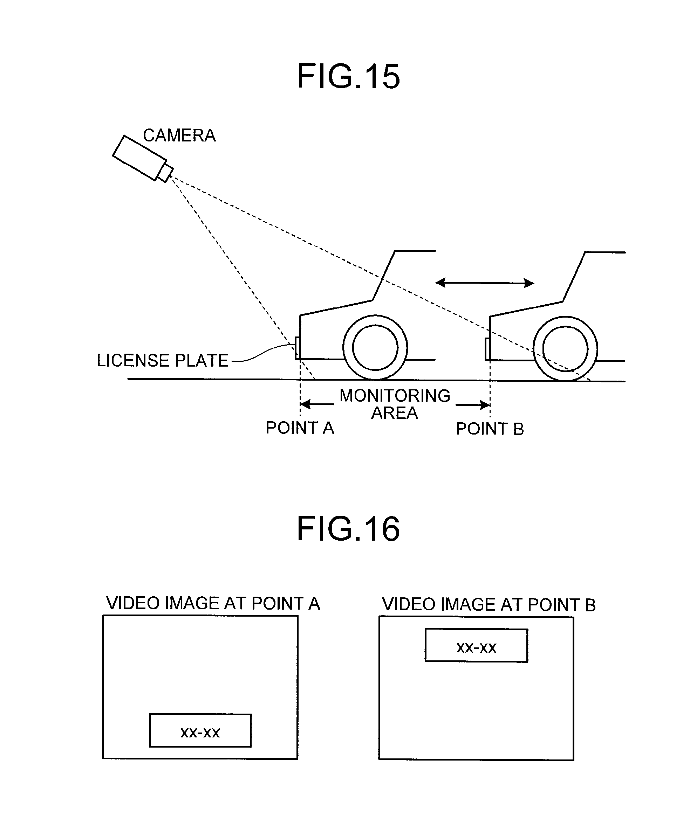

From the basic premise that the illuminance distribution in the monitoring area is constant, it can be assumed that the luminance of the object of which an image is captured under a certain circumstance is constant when the object is at any position on the screen, for example, when the vehicle passes through somewhere on a road. FIG. 15 is a diagram representing an example of conventional image monitoring. In FIG. 15, a camera arranged on the road detects a vehicle that passes through a monitoring area. If the illuminance is constant, the luminance of the object of which an image is captured is constant regardless of the detection position.

FIG. 16 depicts diagrams representing an example of an object to be detected with conventional image monitoring. If the illuminance distribution in the monitoring area at a certain time is constant, the luminance of the image at the point A in FIG. 15 and the luminance of the image at the point B in FIG. 16 are constant, as represented in FIG. 16.

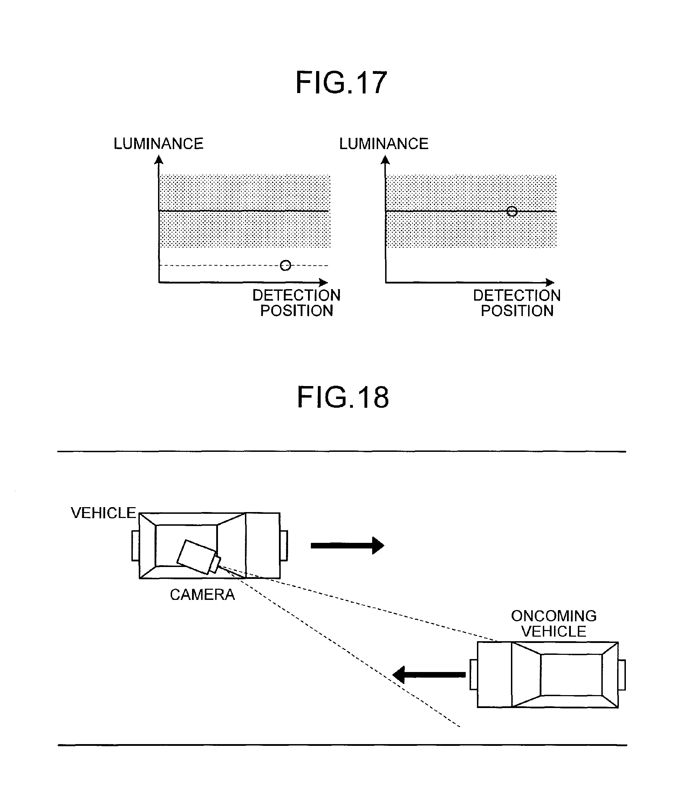

After the object is detected, the luminance of the object is controlled. FIG. 17 depicts graphs representing an example of conventional luminance control. If the luminance of an object falls outside a predetermined value (the shaded part in FIG. 17), as represented on the left in FIG. 17, the aperture of the lens or the like is adjusted such that an image is captured with the predetermined luminance, as represented on the right in FIG. 17. In FIG. 17, an image of the object is captured with a luminance lower than the predetermined luminance (darker than the predetermined brightness). Thus, for example, control for opening the aperture is performed.

Patent Document 1: Japanese Patent No. 2706314
Patent Document 2: Japanese Laid-open Patent Publication No. 2006-311031

DISCLOSURE OF INVENTION

PROBLEM TO BE SOLVED BY THE INVENTION

The above-described technology, however, has a problem in that, when the illuminance distribution in the monitoring area at a certain time is not constant, the luminance of the object to be detected cannot be adjusted properly.

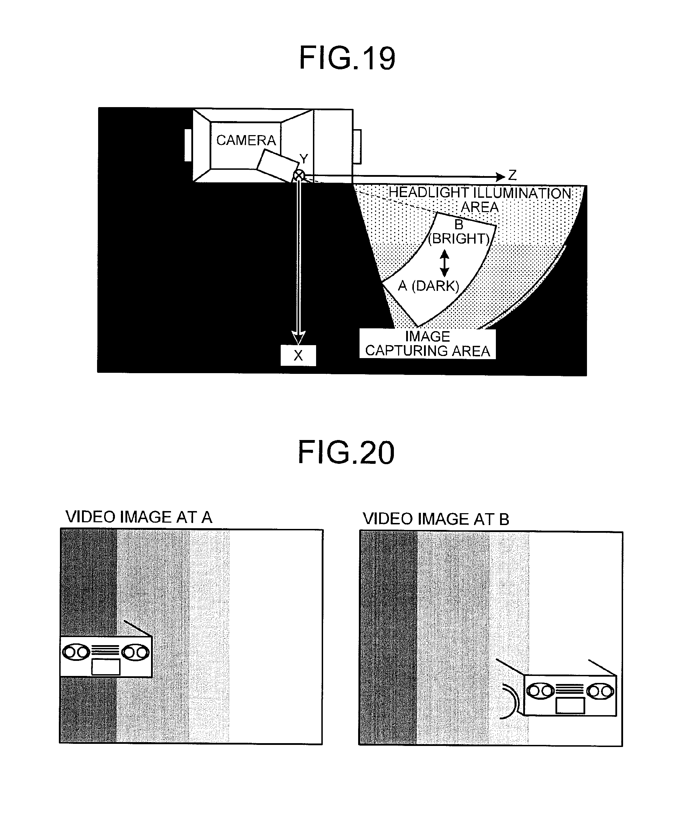

For example, when the object is recognized by illuminating the object, for example, at night, the illuminance in the monitoring area sometimes cannot be made constant. FIG. 18 is a diagram representing an example in which a vehicle that is traveling in an opposite lane is recognized using a camera mounted on a vehicle, and FIG. 19 is a diagram representing the image capturing area and the illuminating area of headlights at night.

If the headlights of the vehicle on which the camera is mounted are used as an illuminating device, without a dedicated illuminating device for monitoring images, as illustrated in FIG. 18, the illuminance in the monitoring area cannot be constant. In other words, in a global coordinate system, in which a camera is the origin, having a Z-axis in the direction, in which the vehicle travels, and a horizontal X-axis orthogonal to the Z-axis, the illuminance on the object differs between real space positions (the positions in space where the object actually exists) due to variations in the illuminating by the head lights, and thus the luminance of the object of which an image is captured differs in each position.

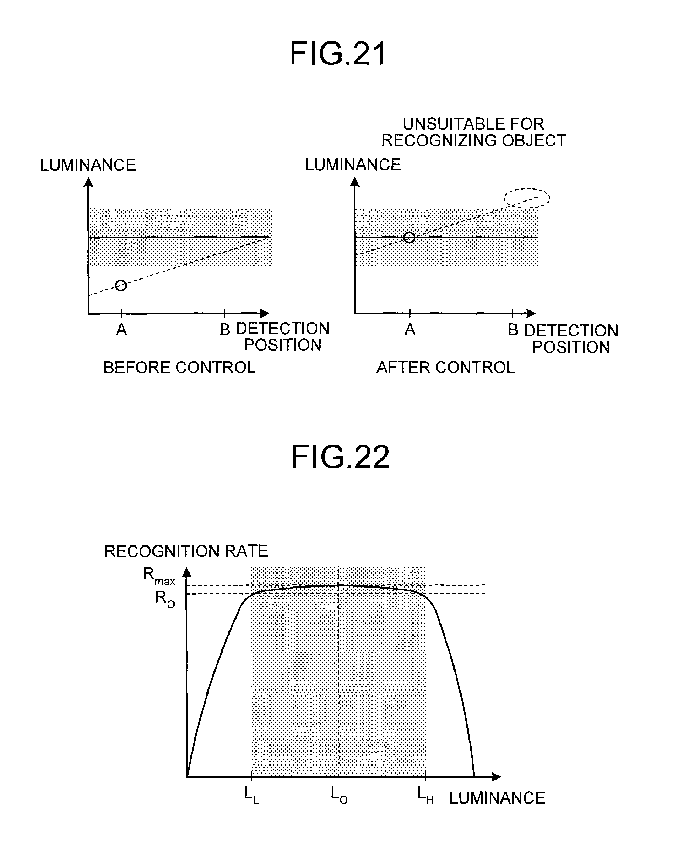

FIG. 20 depicts diagrams representing the difference between the luminance at the positions A and B in FIG. 19, and FIG. 21 depicts graphs illustrating a problem with conventional exposure control. For example, the case is considered where an object passes through a position distant from the vehicle (the X coordinate is large) with a small amount of illuminance, as at the position A in FIG. 19. If the luminance of the detected object at the position A is smaller than a predetermined luminance, as represented on the left in FIG. 20, a camera parameter is adjusted in the conventional method, for example, the aperture of the camera is opened, such that the luminance of the object at the position A becomes the predetermined value.

If the camera parameter is adjusted according to the luminance at the position A, the luminance at the position B that is close to the illuminating device (the X coordinate is small) before adjustment is higher than that at the position A, as represented on the right in FIG. 20, and thus, the luminance exceeds the appropriate range (see FIG. 21). In other words, when the next object to be monitored is detected at the position B, high-light clipping is caused in the image and characters cannot be read accurately. In contrast, if the object is detected at the position A after the object passes through the position B and the camera parameter is adjusted according to the position B, the luminance cannot reach the appropriate range and the object cannot be recognized.

FIG. 22 is a graph representing the relation between the luminance of the object to be recognized and the recognition rate. As represented in FIG. 22, if a dark image with a low luminance is captured, the object cannot be distinguished from noise, which lowers the recognition rate. Inversely, if the luminance is too high, i.e., with saturated luminance, highlight clipping of the object is caused and the object cannot be recognized, which also lowers the recognition rate.

Therefore, in image monitoring, it is necessary to adjust the luminance of the object (or in the monitoring area) to a predetermined value suitable for recognizing the object. For example, the luminance is adjusted (the luminance is adjusted to $L_o$) such that the rate at which objects are recognized always keeps a maximum value $R_{max}$. Alternatively, it may be necessary to set an allowable minimum value $R_o$ of the recognition rate and adjust the luminance (adjust the luminance between $L_L$ and $L_H$) to meet the minimum value $R_o$.

In other words, it is an extremely important objective, even when the illuminance in the monitoring area is not constant, to control the amount of exposure such that the luminance of an object is a value suitable for recognizing the object.

The present invention has been made in view of the above problem. The objectives of the present invention are to provide an image capturing apparatus that, even if the illuminance in a monitoring area is not constant, controls a camera parameter such that the luminance of an object is a value suitable for recognizing the object, to provide an image capturing method, and to provide an image capturing program.

MEANS FOR SOLVING PROBLEM

To solve the problems as described above and achieve the object, the present invention is an image capturing apparatus for detecting an object and capturing an image, and includes a detecting unit that detects the object; an image capturing unit that captures an image of the detected object; a calculating unit that calculates, on the basis of a position and a luminance that are obtained from the captured image of the object, a position and an illuminance in space where the object actually exists; and an exposure amount determining unit that determines an exposure amount with which an image is captured, on the basis of the calculated position and illuminance in the space where the object actually exists.

The present invention further includes a storage unit that previously stores a position and an illuminance in the space where the object actually exists; and an illuminance distribution calculating unit that calculates an illuminance distribution in an entire monitoring area on the basis of an illuminance at a predetermined position in the space where the object actually exists, the illuminance being stored in the storage unit, and on the basis of an illuminance at the predetermined position in the space where the object actually exists, the illuminance being calculated by the calculating unit from the position and the luminance of the image of the object that is captured by the image capturing unit. The exposure amount determining unit determines the exposure amount on the basis of the calculated illuminance distribution.

In the present invention, the illuminance stored in the storage unit stores an illuminance that is measured from only illumination light. The illuminance distribution calculating unit calculates an environment light illuminance on the basis of an illuminance at the predetermined position in the space where the object actually exists, the illuminance being measured from only the illumination light and being stored in the storage unit, and on the basis of the illuminance at the predetermined position in the space where the object actually exists, the illuminance being calculated by the calculating unit from the position and the luminance of the image of the object that is captured by the image capturing unit. The illuminance distribution calculating unit calculates an illuminance distribution in the entire monitoring area, the illuminance distribution being obtained by adding the environment light illuminance to the illuminance that is measured with only the illumination light.

In the present invention, when an image cannot be captured in appropriate brightness over the entire monitoring area, the exposure amount determining unit determines the exposure amount such that an expected value of an overall rate, at which objects in the monitoring area are recognized, is the maximum from an appearing rate at each position in the monitoring area in the space where the object actually exists, and from an expected value of a rate, at which objects are recognized, with respect to each luminance of the image.

In the present invention, the exposure amount determining unit determines the exposure amount such that a luminance of an object, on a screen, that is detected at a position with a highest illuminance in the monitoring area in the space where the object actually exists is an upper limit value.

In the present invention, the exposure amount determining unit determines the exposure amount such that a luminance of an object, on a screen, that is detected at a position with a lowest illuminance in the monitoring area in the space where the object actually exists is a lower limit value.

The present invention is an image capturing method for detecting an object and capturing an image, and includes detecting the object; capturing an image of the detected object; calculating, on the basis of a position and a luminance that are obtained from the captured image of the object, a position and an illuminance in space where the object actually exists; and determining an exposure amount with which an image is captured, on the basis of the calculated position and illuminance in the space where the object actually exists.

The present invention is an image capturing program that causes a computer to perform detecting the object; capturing an image of the detected object; calculating, on the basis of a position and a luminance that are obtained from the captured image of the object, a position and an illuminance in space where the object actually exists; and determining an exposure amount with which an image is captured, on the basis of the calculated position and illuminance in the space where the object actually exists.

EFFECT OF THE INVENTION

According to the present invention, an object to be monitored is detected and its image is captured. A recognition process is performed on the object, of which an image is captured, to calculate a position and an illuminance in space where the object actually exists, and an exposure amount is determined on the basis of the calculated position and illuminance. Accordingly, even if the illuminance is not constant in a monitoring area, the exposure amount can be adjusted to a value with which the luminance of an object becomes a value suitable for recognizing the object.

According to the present invention, positions and illuminances in the space where the object actually exists are previously stored in a storage device. An illumination distribution in the entire monitoring area is calculated on the basis of an illuminance at a predetermined position in the space where the object actually exists, which illuminance is stored in the storage unit, and on the basis of an illuminance at the predetermined position in the space where the object actually exists, which illuminance is calculated from the position and luminance of the captured image of the object. The exposure amount is determined on the basis of the illuminance distribution. This increases the accuracy in the image recognition process in the case where an illuminating device having a non-constant illuminance distribution.

According to the present invention, illuminances that are measured with only illumination light are stored in the storage unit. An environment light illuminance is calculated on the basis of an illuminance at the predetermined position in the space where the object actually exists, which illuminance is measured with only the illumination light and stored in the storage unit, and on the basis of the illuminance at the predetermined position in the space where the object actually exists, which illuminance is calculated from the position and the luminance of the measured image of the object. An illuminance distribution in the entire monitoring area obtained by adding the environment light illuminance to the illuminance of the illumination light is calculated. Accordingly, the exposure amount can be adjusted such that the luminance of the entire monitoring area becomes a value suitable for recognizing objects.

According to the present invention, when images cannot be captured in appropriate brightness over the entire monitoring area, the exposure amount is determined such that an expected value of an overall rate, at which objects in the monitoring area are recognized, is the maximum from an appearing rate at each position in the monitoring area in the space where the object actually exists, and from an expected value of a rate, at which objects are recognized, with respect to each luminance of the image. Accordingly, the decrease of the rate at which objects are recognized in the monitoring area can be minimized.

According to the present invention, the exposure amount is determined such that a luminance of an object, on a screen, that is detected at a position with the highest illuminance in the monitoring area in the space where the object actually exists is an upper limit value. Accordingly, even if the illuminance is not constant in the monitoring area, the exposure amount can be adjusted to a value with which the luminance of an object becomes a value suitable for recognizing the object.

According to the present invention, the exposure amount is determined such that a luminance of an object that is detected at a position with the lowest illuminance in the monitoring area in the space where the object actually exists is a lower limit value. Accordingly, even if the illuminance is not constant in the monitoring area, the exposure amount can be adjusted to a value with which the luminance of an object becomes a value suitable for recognizing the object.

BRIEF DESCRIPTION OF DRAWINGS

FIG. 1 is a graph of an example of an illuminance distribution in a monitoring area.
FIG. 2 is a graph of an example of a target value based on the illuminance distribution in the entire monitoring area.
FIG. 3 depicts graphs representing exposure amount control based on the target value in FIG. 2.
FIG. 4 is a function block diagram of a configuration of the image capturing apparatus according to the first embodiment.
FIG. 5 depicts graphs for explaining luminance control according to the first embodiment.
FIG. 6 is a function block diagram of a configuration of a control device.
FIG. 7 is a diagram representing the relation between coordinates of an object in a real space, coordinates of the object on a camera image, and coordinates of the object on global coordinates.
FIG. 8 is a graph for explaining an illuminance distribution at the present time.
FIG. 9 is a flowchart of a process procedure of an image recognition device according to the first embedment.
FIG. 10 is a flowchart of a process procedure of an image recognition device according to the first embodiment.
FIG. 11 is a diagram representing an expected value of recognition rate and an object luminance at each camera parameter at a position P.
FIG. 12 is a diagram for explaining another application example of the image capturing apparatus.
FIG. 13 is a diagram for explaining another application example of the image capturing apparatus.
FIG. 14 is a diagram of a hardware configuration of a computer that constitutes the image capturing apparatus according to the first embodiment.
FIG. 15 is a diagram representing an example of conventional image monitoring.
FIG. 16 depicts diagrams representing an example of an object to be detected with conventional image monitoring.
FIG. 17 depicts diagrams representing an example of conventional luminance control.
FIG. 18 is a diagram representing an example in which a vehicle that is traveling in an opposite lane is recognized using a camera mounted on a vehicle.
FIG. 19 is a diagram representing an image capturing area and an illuminating area of headlights at night.
FIG. 20 depicts diagrams representing the difference between the luminance at the positions A and B in FIG. 19.
FIG. 21 depicts graphs illustrating a problem with conventional exposure control.
FIG. 22 is a graph representing the relation between the luminance of the object to be recognized and the recognition rate.

EXPLANATIONS OF LETTERS OR NUMERALS

10 Computer
11, 110 Illuminating device
12, 120 Video image capturing device
13 Input device
14 Monitor
15 RAM
15a, 20a Various data
16 ROM
17 Medium reading device
18 Interface
19 CPU
19a Image recognition process
19b Camera parameter calculating process
20 HDD
21 Bus
20b Image recognition program
20c Camera parameter calculating program
100 Image capturing apparatus
130 Image recognition device
140 Control device
141 Coordinate converting unit

142 Luminance-illuminance converting unit
143 Illuminance distribution storage unit
144 Illuminance detecting unit
145 Camera parameter calculating unit
146 Control signal output unit

BEST MODE(S) FOR CARRYING OUT THE INVENTION

Embodiments of an image capturing apparatus, an image capturing method, and an image capturing program according to the present invention are explained in detail below with reference to the drawings. The embodiments do not limit the present invention.

First Embodiment

First, an overview and features of an image capturing apparatus according to a first embodiment are explained. The image capturing apparatus according to the first embodiment adjusts the amount of exposure according to an illuminance distribution over an entire monitoring area (adjusts a camera parameter). In other words, in consideration of differences in illuminance between positions in a real space (space in which an object to be monitored exists), the exposure amount is adjusted, with respect to each position at which an object is detected, to achieve luminance that allows recognition of objects over the entire monitoring area.

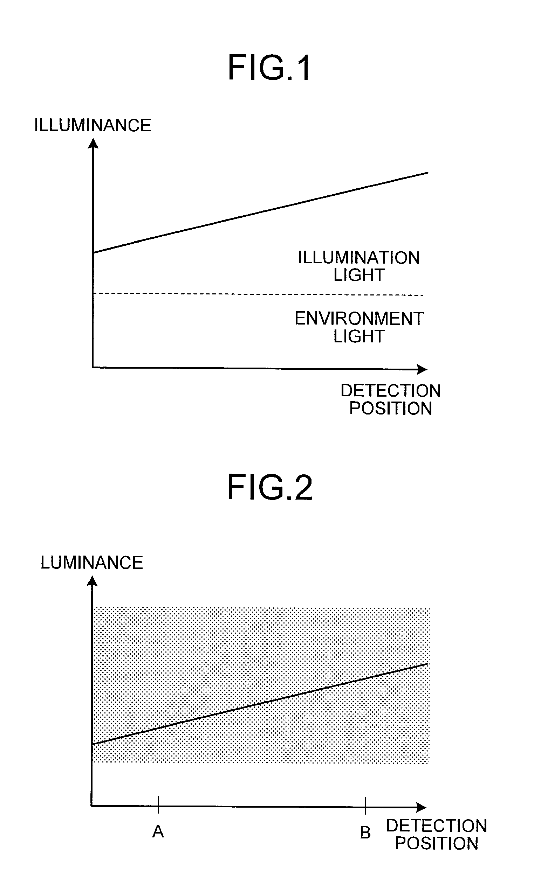

FIG. 1 is a graph of an example of an illuminance distribution in a monitoring area. As illustrated in FIG. 1, the illuminance distribution in the monitoring area is determined by the sum of the amount of environment light that is applied from a distant light source, such as the sky, to the monitoring area and the amount of illumination light that is used to illuminate the monitoring area. The environment light and the illumination light have the following features.

The features of the environment light are that the environment light varies over time according to the state of the atmosphere, such as movements of clouds, but, the difference in luminance between positions in the monitoring area is small and the illuminance distribution in the monitoring area is constant. The features of the illumination light are that the amount of reaching light differs between positions in the monitoring area and the illuminance distribution in the monitoring area is not constant, but, variations over time can be ignored.

If the illuminance distribution of the illumination light and the illuminance at one point in the monitoring area are known, the illuminance distribution in the entire monitoring area at the time point can be known. On the basis of the illuminance distribution in the entire monitoring area, the image capturing apparatus can adjust the exposure amount (the camera parameter) such that images are captured with a luminance suitable for recognizing the object over the entire monitoring area (a target value of the exposure amount at each position can be set).

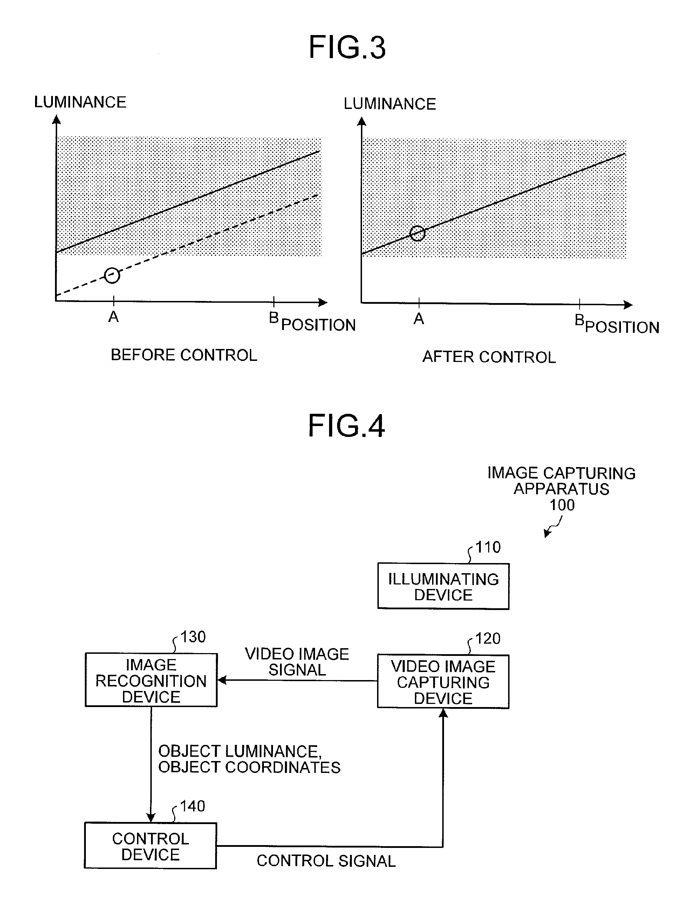

FIG. 2 is a graph of an example of a target value based on the illuminance distribution in the entire monitoring area. FIG. 3 depicts graphs representing exposure amount control based on the target value in FIG. 2. By, as represented in FIG. 2, setting lower a target value of the luminance at the point A (see FIG. 19), which is distant from the illuminating device and at which dark images are captured, and by setting higher a target value of the luminance at the point B (see FIG. 19), which is close to the illuminating device and at which bright images are captured, from the illuminance distribution in the monitoring area, the luminance that allows recognition of the object can be maintained over the entire monitoring area.

As represented in FIG. 3, for example, even if the exposure amount is adjusted to set the luminance corresponding to the position A, at which the amount of illumination light is small, to the target value, the luminance corresponding to the position B, at which the amount of illumination light is large, does not exceed an appropriate range because the target value of the luminance corresponding to the position A is set lower.

A configuration of the image capturing apparatus according to the first embodiment is explained below. FIG. 4 is a function block diagram of a configuration of the image capturing apparatus according to the first embodiment. As represented in FIG. 4, an image capturing apparatus 100 includes an illuminating device 110, a video image capturing device 120, an image recognition device 130, and a control device 140.

The illuminating device 110 is a device that illuminates a monitoring area. The video image capturing device 120 is a device that captures video images in the monitoring area according to a camera parameter (for example, the camera aperture) that is determined by the control device 140, and outputs the video images as video signals to the image recognition device 130. When the video image capturing device 120 detects an object to be monitored in the monitoring area, the video image capturing device 120 controls the orientation of the camera according to the detected object and captures video images of the object.

The image recognition device 130 receives video signals from the video image capturing device 120, detects the object to be monitored from the received video signals, specifically identifies the detected object, calculates the luminance of the object on the image (hereinafter, referred to as an "object luminance") and detects the coordinates of the object on the image (hereinafter, referred to as "object coordinates"). The image recognition device 130 outputs information on the object luminance and the object coordinates to the control device 140.

The control device 140 is a device that calculates a position and an illuminance in space, in which the object actually exists, on the basis of the information on the object luminance and the object coordinates that are output from the image recognition device 130, and determines a camera parameter on the basis of the calculated position and illuminance and the present camera parameter. The control device 140 outputs information on the determined camera parameter as control signals to the video image capturing device 120. The video image capturing device 120 that receives the control signals adjusts the camera parameter of the video image capturing device 120 according to the information on the camera parameter contained in the control signals.

The image capturing apparatus 100 according to the first embodiment sets a reference point (point O) at, for example, the center of the monitoring area in the real space, estimates the luminance of the object at the point O from the luminance of the object and the detection position on the basis of the illuminance distribution in the monitoring area, and adjusts the exposure amount (the camera parameter) such that the estimated luminance is a predetermined value.

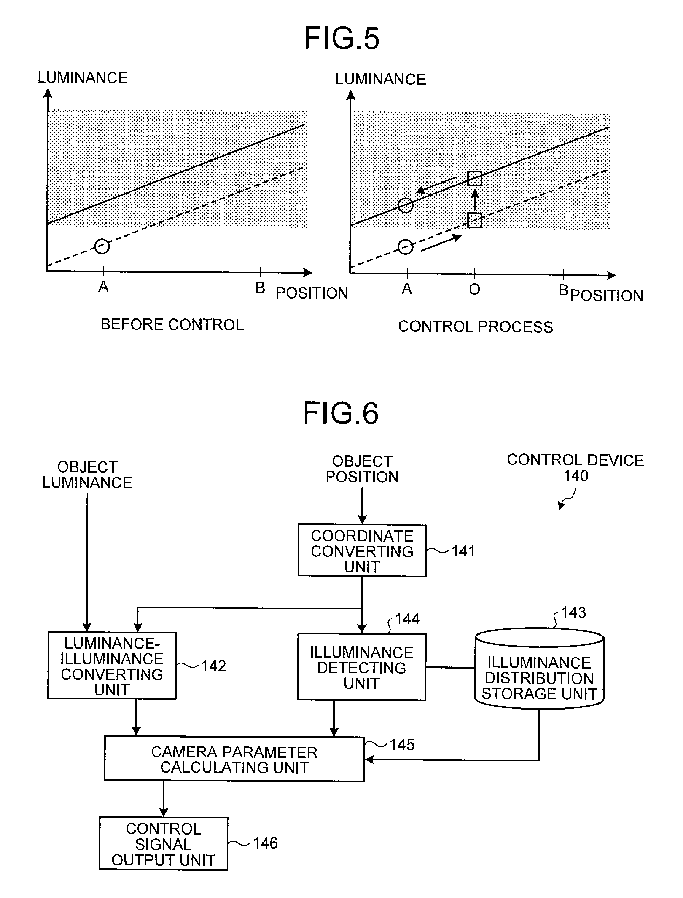

FIG. 5 depicts graphs for explaining luminance control according to the first embodiment. If the object is detected at the point A, as illustrated on the left in FIG. 5, the luminance at the point O is estimated from the luminance at the point A, and the exposure amount is adjusted such that the luminance at the point O is the predetermined value, as illustrated on the right in FIG. 5. This adjustment allows control to achieve a luminance with which the object can be recognized over the entire monitoring area, and, the object can be recognized at any position at which the object is passing through the monitoring area is detected (for example, even at the point B).

The specific method of controlling the luminance is described below. For simple control, it is provided that the luminance is controlled using the aperture of the camera. Provided that a luminance I of a captured image is proportional to an illuminance L and the reciprocal of an aperture amount F, it can be assumed that the relation of the following equation is satisfied.

$$I = k \frac{L}{F} \tag{1}$$

It is provided that the illuminance distribution of the illumination light at the position A is known. It is provided that the amount of aperture at a time T is F(T), the luminance of the object that is detected at the position A is I(T,A). Provided that the illuminance of the environment light is Lg(T), the following equation is satisfied from Equation (1).

$$I(T, A) = \frac{k\{L_1(O) + L_g(T)\}}{F(T)} \tag{2}$$

Note that k of Equation (1) is a constant of proportionality.

The luminance at the reference point O is as follows.

$$I(T, O) = \frac{k\{L_1(O) + L_1(A)\}}{F(T)} \tag{3}$$

An aperture amount F'(T) with which the luminance at the point O becomes a predetermined value $I_o$ satisfies the following equation.

$$I_o = \frac{k\{L_1(O) + L_g(T)\}}{F'(T)} \tag{4}$$

From Equations (2) to (4), the following equation is satisfied.

$$F'(T) = \frac{k\{L_1(O) - L_1(A)\} + I(T, A)F(T)}{I_0} \tag{5}$$

From the luminance and position of the object that is detected at the time T and the illuminance distribution of the illumination light, an aperture amount (the exposure amount) that serves as a new camera parameter is determined.

Subsequently, a configuration of the control device 140 that determines a camera parameter is explained. FIG. 6 is a function block diagram of the configuration of the control device 140. As illustrated in FIG. 6, the control device 140 includes a coordinate converting unit 141, a luminance-illuminance converting unit 142, an illuminance distribution storage unit 143, an illuminance detecting unit 144, a camera parameter calculating unit 145, and a control signal output unit 146.

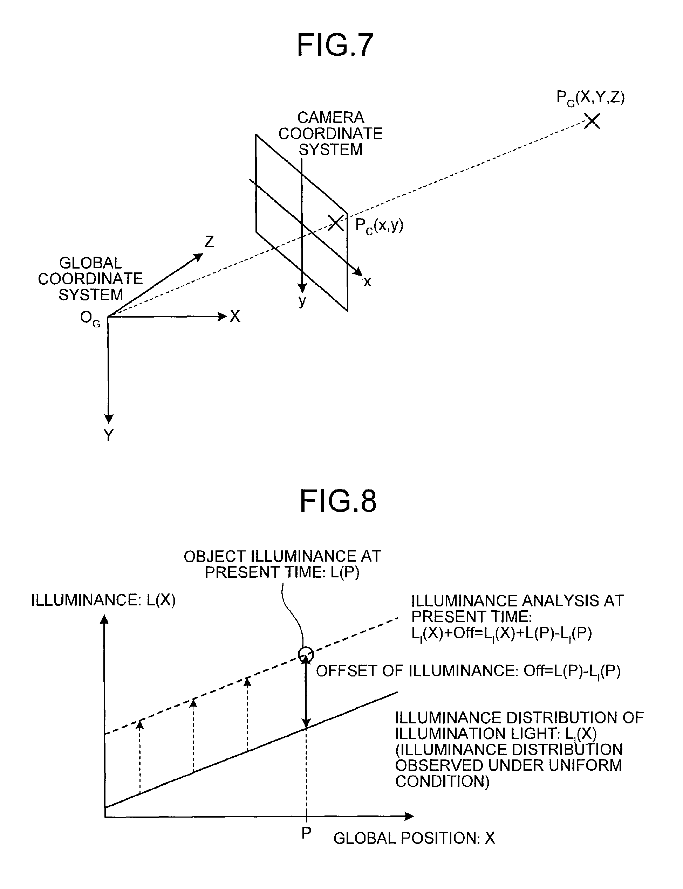

The coordinate converting unit 141 is a processing unit that receives the object coordinates (the coordinates of the object on the camera coordinates) from the image recognition device 130, and performs coordinate conversion on the received object coordinates to convert the coordinates (x,y) of the object on the image to global coordinates (X, Y,Z). Hereinafter, the object coordinates that are converted to the global coordinate system are referred to as "converted object coordinates". FIG. 7 is a diagram representing the relation between the coordinates of the object in the real space, the coordinates of the object on the camera image, and the coordinates of the object on the global coordinates. The coordinate converting unit 141 outputs information on the converted object coordinates to the luminance-illuminance converting unit 142 and the illuminance detecting unit 144.

The following technologies may be used for the method of converting object coordinates to a global coordinate system, which is performed by the coordinate converting unit 141. For example, if the actual size of the object is known, the object coordinates can be converted to the converted object coordinates in way that the distance to the object is calculated on the basis of the size of the object on the screen, the angle of view, and the actual size of the object and the orientation of the object is then determined from the detected coordinates.

The coordinate converting unit 141 can convert the object coordinates to the converted object coordinates using stereo processing. In other words, images of the object are captured using two or more video image capturing devices, and converted object coordinates can be calculated from a difference in coordinates of the object between the image spaces, using a known stereo technology. Alternatively, the coordinate converting unit 141 may directly determine the coordinates of the object on the global coordinates by determining the actual position of the objet, using a distance sensor, such as a laser or radar.

The luminance-illuminance converting unit 142 is a processing unit that receives the object luminance from the image recognition device 130 and converts the received object luminance to an illuminance (hereinafter, referred to as "object illuminance"). The luminance-illuminance converting unit 142 receives the converted object coordinates from the coordinate converting unit 141, searches a luminance of the coordinates corresponding to the received converted object coordinates from the object illuminance, and outputs information on the searched object illuminance to the camera parameter calculating unit 145.

The luminance-illuminance converting unit 142 may employ any method of converting the a luminance to an illuminance. For example, the luminance-illuminance converting unit 142 previously stores information on the present camera parameter (the aperture amount F) in its storage unit, and converts the object luminance to the object illuminance using the relation of Equation (1).

The illuminance distribution storage unit 143 is a storage unit that stores information on the illuminance distribution (the illuminance at each set of coordinates) of the illuminating device 110, which is previously observed under the following uniform condition. For example, in the state where the image capturing apparatus 100 is set in a dark room and the illuminance distribution of the illuminating device 110 is measured, so that the illuminance at each set of coordinates (X,Y,Z) can be measured without the effects of the environment light.

If the image capturing apparatus 100 cannot set in a dark room, the illuminance at each set of coordinates (X, Y,Z) can be measured by, in the state where the environment light is stable, measuring the illuminance at each set of coordinates in the real space in the image-capturing area in the case where the illuminating device 110 is turned on and the case where the illuminating device 110 is turned off and calculating the difference between these cases.

The illuminance detecting unit 144 receives the converted object coordinates from the coordinate converting unit 141, searches information on the illuminance of the coordinates corresponding to the received converted object coordinates (the coordinates of the object on the global coordinates) from the illuminance distribution storage unit 143, and outputs the searched information as an illumination illuminance to the camera parameter calculating unit 145.

The camera parameter calculating unit 145 is a processing unit that calculates a camera parameter, to which adjustment is to be made, on the basis of the present camera parameter, the object illuminance, the illumination illuminance, and the information stored in the illuminance distribution storage unit 143. Specifically, the camera parameter calculating unit 145 sequentially performs a difference calculating process, a process for calculating an illuminance distribution at the present time, and a camera parameter calculating process.

In the difference calculating process, the camera parameter calculating unit 145 calculates the difference between the object illuminance and the illumination illuminance and calculates the illuminance of the environment light at the present time (hereinafter, the environment light illuminance and offset of illuminance).

In the process of calculating the illuminance distribution at the present time, the camera parameter calculating unit 145 searches the illuminance corresponding to each set of coordinates, which is contained in the monitoring area, from the illuminance distribution storage unit 143, and extracts each searched illuminance corresponding to each set of coordinate as the illuminance distribution (the illuminance distribution doses not cover the environment light). By adding the offset of illuminance to the illuminance of each set of coordinates that is contained in the illuminance distribution, the illuminance distribution at the present time (illuminance distribution of the environment light+illuminance distribution of the illumination light) can be calculated. The information of each set of coordinates contained in the monitoring area may be stored in the camera parameter calculating unit 145.

FIG. 8 is a graph for explaining the illuminance distribution at the present time. As represented in FIG. 8, if an object illuminance $L(P)$ at a position P can be specified, the offset of illuminance can be calculated by subtracting $L_1(P)$ from $L(P)$. $L_l(P)$ represents the illuminance at the position P in the illuminance distribution of the illuminating device. By adding the illuminance offset to each illuminance at each set of coordinates of the illuminance distribution $L_l(X)$, the illuminance distribution at the present time can be calculated.

Subsequently, in the camera parameter calculating process, the camera parameter calculating unit 145 uses Equation (5) to calculate a camera parameter (an aperture amount $F'(T)$). The value of a predetermined value $I_o$ may be specified by any type of method.

For example, the camera parameter calculating unit 145 specifies the maximum illuminance and the coordinates corresponding to the maximum illuminance from the illuminance distribution at the present time (see FIG. 8), and calculates an aperture amount (a camera parameter) such that the maximum illuminance is a predetermined upper limit value. For example, provided that the upper limit value is $I_C$ and the coordinates (the reference point) of the maximum illuminance is C, the aperture amount is calculated by the following equation.

$$F'(T) = \frac{k\{L_1(C) - L_1(A)\} + I(T, A)F(T)}{I_C} \tag{6}$$

The camera parameter calculating unit 145 specifies the minimum illuminance and the coordinates corresponding to the maximum illuminance from the illuminance distribution at the present time (see FIG. 8), and calculates an aperture amount (a camera parameter) such that the minimum illuminance is a predetermined lower limit value. For example, provided that the lower limit value is $I_D$, and the coordinates of the minimum illuminance (the reference point) is D, the aperture amount is calculated by the following equation.

$$F'(T) = \frac{k\{L_1(D) - L_1(A)\} + I(T, A)F(T)}{I_D} \tag{7}$$

The camera parameter calculating unit 145 outputs information on the calculated camera parameter to the control signal output unit 146.

The control signal output unit 146 is a processing unit that receives the information on the camera parameter from the camera parameter calculating unit 145 and outputs the received information on the camera parameter to the video image capturing device 120 to update the camera parameter of the video image capturing device 120.

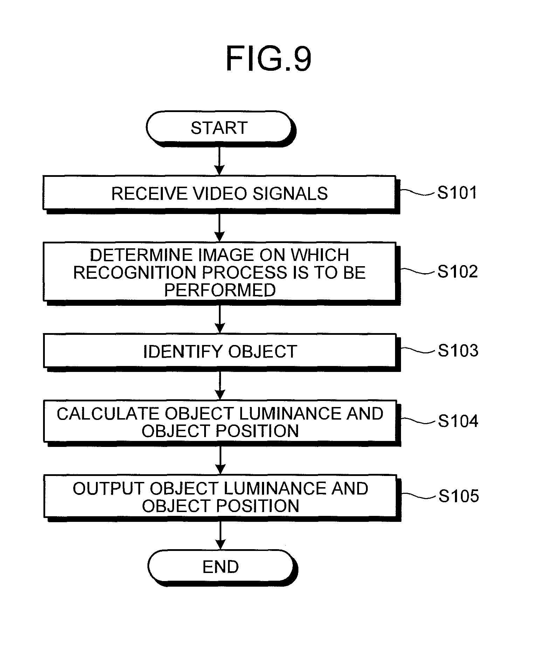

Subsequently, a process procedure of the image recognition device 130 according to the first embodiment is explained. FIG. 9 is a flowchart of the process procedure of the image recognition device 130 according to the first embedment. As represented in FIG. 9, the image recognition device 130 receives video signals from the video image capturing device 120 (step S101) and determines an image on which a recognition process is to be performed (step S102).

The image recognition device 130 identifies an object from the image (step S103), calculates an object luminance and object coordinates (step S104), and outputs the object luminance and the object coordinates to the control device 140 (step S105).

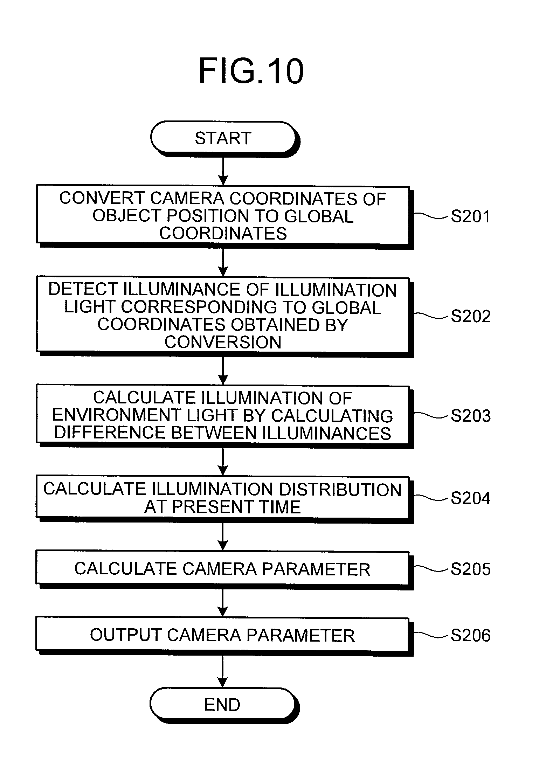

Subsequently, a process procedure of the control device 140 according to the first embedment is explained. As represented in FIG. 10, the control device 140 converts camera coordinates at an object position to global coordinates (step S201) and detects the illuminance of illumination corresponding to the global coordinates obtained by the conversion (step S202).

Subsequently, the control device 140 calculates an environment light illuminance (an offset of illuminance) by calculating a difference between each illuminance (step S203), calculates an illuminance distribution at the present time (step S204), calculates a camera parameter (step S205), and outputs information on the calculated camera parameter (step S206).

Because, as described above, the control device 140 calculates the camera parameter that affects the exposure amount in image capturing on the basis of the coordinates in the space where the object actually exists and the illuminance distribution, the exposure amount of the video image capturing device 120 can be appropriately adjusted even if the illuminance distribution in the real space at a certain time is not constant.

As described above, in the image capturing apparatus 100 according to the first embodiment, the image recognition device 130 detects an object to be monitored and performs the recognition process on the detected object to calculate an object luminance and object coordinates, and the control device 140 calculates a position and an illuminance in space, in which the object actually exists, on the basis of the object luminance and the object coordinates, calculates a camera parameter on the basis of the calculated position and illuminance and the present camera parameter, and adjusts the exposure amount by controlling the camera parameter of the video image capturing device 120 according to the calculated camera parameter. Therefore, even if the illuminance in the monitoring area is not constant, the exposure amount can be adjusted such that the luminance of an object is a value suitable for recognizing the object.

Second Embodiment

The first embodiment of the present invention is explained above. However, the present invention may be carried out in various different modes in addition to the above-described first embodiment. Other embodiments of the present invention are explained below as a second embodiment.

(1) Case where image capturing with luminance suitable for recognizing object is difficult over entire monitoring area

In the first embodiment, the camera parameter is determined such that the luminance of the object at a certain reference position is a value optimum for recognizing the object. In a wide monitoring area, it is sometimes difficult to capture images in brightness suitable for recognizing objects over the entire monitoring area.

In this case, a decrease of the recognition rate can be expected in the area in which images cannot be captured with a luminance suitable for recognizing objects. Generally, the degree of decrease of the recognition rate differs between a side where the luminance is saturated and a dark (the luminance is a predetermined value or less) side. To minimize the decrease of the recognition rate, a target value of luminance is set as follows.

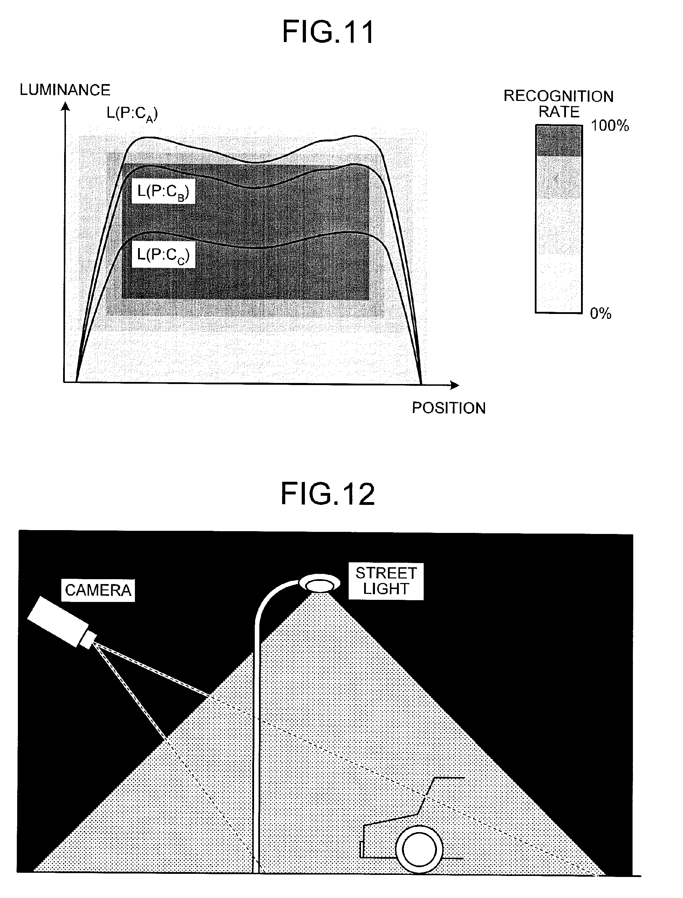

FIG. 11 is a diagram representing an expected value of recognition rate and an object luminance at a position P with respect to each camera parameter. The gradations in FIG. 11 represent expected values $R(P,L)$ of recognition rate at the position P with a luminance L. The solid line in FIG. 11 represents object luminances $L(P:C)$ at the position P in the cases where the camera parameters (for example, the aperture amount) are set to $C_A$ to $C_C$.

Accordingly, the expected value of recognition rate at the position P can be represented in $R(P,L(P:C))$. An overall recognition rate $R_E$ is calculated as follows, using a rate $T(P)$ at which the object is detected at the position P.

$$R_E = \int R_C(P, L)T(P)dP \qquad (8)$$

An recognition rate $R(P,L)$ and a rate $T(P)$ at the position P in the case where the luminance is L are previously observed and stored in a storage device (not illustrated) of the image capturing apparatus 100. From illuminance conditions that are estimated from the recognition result, a relation $L(P:C)$ between the position P and the luminance L with respect to the camera parameter C is calculated. Accordingly, a result $R_C(P,L)$ can be determined.

Determination of $R_C(P,L)$ leads to the overall recognition rate, i.e., a function $R_E(C)$ of the camera parameter C. The control device 140 then calculates a camera parameter C with which the recognition rate $R_E$ is the maximum. The control device 140 outputs control signals to the video image capturing device 120 such that the calculated parameter is set. In the case where the difference in viewing the object between positions can be ignored, it suffices that, without observing the relation between the position P and the luminance L over the entire monitoring area, a recognition rate with respect to the luminance L is observed at a point $P_O$.

(2) Other application examples

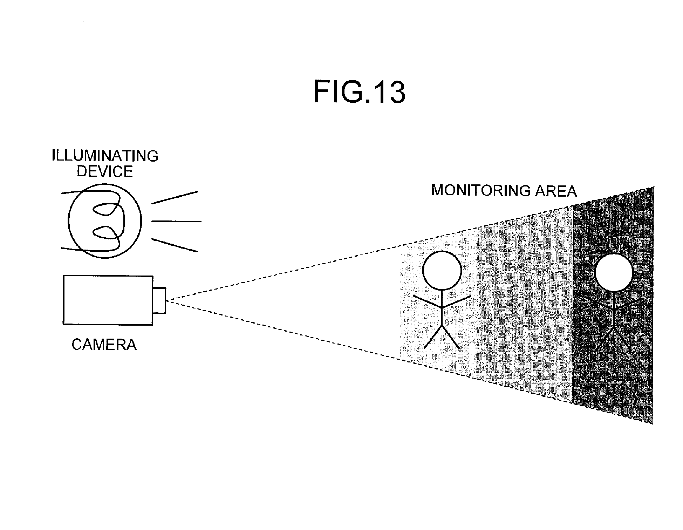

The fist embodiment is explained taking, as an example, the case where, as illustrated in FIG. 18, the vehicle that it to travel is provided with the image capturing apparatus to identify the oncoming vehicle. However, the present invention is not limited to this. FIG. 12 and FIG. 13 are diagrams for explaining other application examples of the image capturing apparatus.

As represented in FIG. 12, for example, in road monitoring, a vehicle that is traveling on a road may be recognized using the image capturing apparatus according to the first embodiment and the camera parameter may be adjusted using the above-described method, so that the recognition rate can be increased. In this case, the image capturing apparatus previously observes an illuminance distribution of a street light and stores it in a storage device, and calculates a camera parameter using information on the illuminance distribution that is stored in the storage device.

As illustrated in FIG. 13, the image capturing apparatus according to the first embodiment may be used in order to identify a person who moves on a street. Even if the distance from the illuminating device to each person significantly differs and the illuminance distribution differs between positions at a certain time, the luminance in the monitoring area may be appropriately adjusted using the image capturing apparatus according to the first embodiment. This increases the rate at which each person is recognized.

(3) Other examples of image capturing apparatus for adjusting exposure amount

In the first embodiment, is described the method of controlling the aperture of the lens in order to adjust the exposure amount of the image capturing apparatus (the video image capturing device 120). However, the present invention is not limited to this. The exposure amount of the image capturing apparatus may be adjusted by changing the shutter speed of the camera or changing the permeability of the light-amount adjusting filter (an ND filter) attached to the lens.

(4) Proportion constant k of Equation (1)

The first embodiment is explained as an example under the premise that the luminance and illuminance are proportional to each other at each set of coordinates. However, the present invention is not limited to this. In other words, even in the case where the luminance and illuminance are not proportional to each other, the above-described method may be adapted in a way that the luminance at the time when an image of an object is captured and an illuminance corresponding to the luminance are calculated with respect to each set of coordinates, and that a table between luminance and illuminance is stored from which a proportion constant k of each set of coordinates is calculated.

(5) Configuration of system

The processes that are explained as those automatically performed among the processes according to the first embodiment may be entirely or partially performed manually. Furthermore, the processes that are explained as those manually performed may be entirely or partially performed automatically using known methods. In addition, the process procedures, control procedures, specific names, information including various types of data and parameters, which are illustrated in the specification or the drawings, may be changed arbitrarily unless otherwise noted.

Each element of the image capturing apparatus 100 represented in FIG. 4 is a functional concept and thus is not required to be physically configured as represented in the drawings. In other words, specific modes of dispersion or integration of the devices are not limited to those illustrated in the drawings. The devices may be configured in a way that they are entirely or partly dispersed or integrated functionally or physically on an arbitrary basis according to various loads or use. Furthermore, the processing functions performed by the devices may be entirely or arbitrarily partly implemented by a CPU and a program that is analyzed and executed by the CPU, or may be implemented as wired logic hardware.

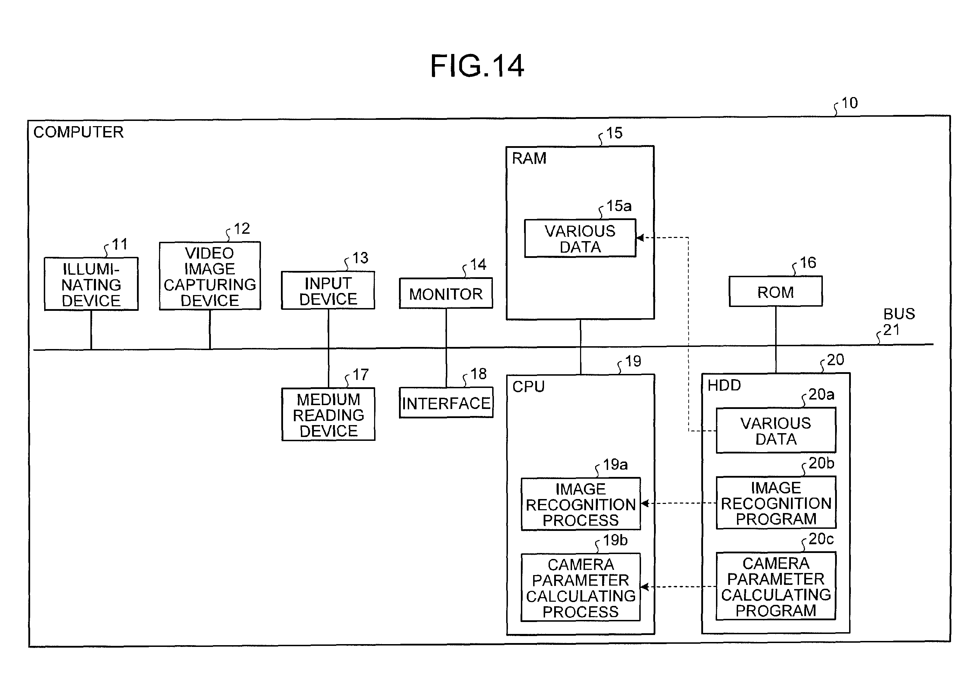

FIG. 14 is a diagram of a hardware configuration of a computer that configures the image capturing apparatus according to the first embodiment. As illustrated in FIG. 14, a computer (an image capturing apparatus) 10 is configured by connecting, via a bus 21, an illuminating device 11, a video image capturing device 12, an input device 13, a monitor 14, a random access memory (RAM) 15, a read only memory (ROM) 16, a medium reading device 17 that reads data from a storage medium, an interface 18 that transmits and receives data with other devices, and a central processing unit (CPU) 19, and a hard disk drive (HDD) 20. The illuminating device 11 and the video image capturing device 12 correspond respectively to the illuminating device 110 and the video image capturing device 120 that are illustrated in FIG. 4.

The HDD 20 stores an image recognition program 20b and a camera parameter calculating program 20c that implement the same functions as those of the image capturing apparatus 100. The CPU 19 reads the image recognition program 20b and the camera parameter calculating program 20c and executes the programs to start an image recognition process 19a and a camera parameter calculating process 19b. The image recognition process 19a corresponds to the process that is performed by the image recognition device 130 and the camera parameter calculating program 19b corresponds to the process performed by the control device 140.

**EP 2 211 534 A1**

The HDD 20 stores various data 20a including information on the illuminance distribution of the illuminating device 11, which is received by the input device 13, the illuminance distribution of the environment light, the object luminance, and the object coordinates. The CPU 19 reads the various data 20a that is stored in the HDD 20 and stores it in the RAM 15, calculates a camera parameter using various data 15a stored in the RAM 15, and sets the calculated camera parameter in the video image capturing device 12.

The image recognition program 20b and the camera parameter calculating program 20c, which are represented in FIG. 14, are not necessarily stored in the HDD 20 previously. For example, the image recognition program 20b and the camera parameter calculating program 20c may be stored in "a portable physical medium" that is inserted to the computer, such as a flexible disk (FD), a CD-ROM, a DVD disk, a magneto-optical disk, or an IC card, "a fixed physical medium" that is provided in or outside the computer, such as a hard disk drive (HDD), or "another physical medium" that is connected to the computer via, for example, public lines, the Internet, a LAN, or a WAN, such that the computer can read the image recognition program 20b and the camera parameter calculating program 20c from the medium or the computer and executes the programs.

INDUSTRIAL APPLICABILITY

As described above, the image capturing apparatus, the image capturing method, and the image capturing program according to the present invention are useful for systems that identify an object in a monitoring area by adjusting the camera parameter. Particularly, they are suitable for the case where, even if an illuminance distribution at a certain time is not constant, the recognition rate has to be increased regardless the position of the object contained in a monitoring area.

**Claims**

1. An image capturing apparatus for detecting an object and capturing an image, the image capturing apparatus comprising:

   a detecting unit that detects the object;
   an image capturing unit that captures an image of the detected object;
   a calculating unit that calculates, on the basis of a position and a luminance that are obtained from the captured image of the object, a position and an illuminance in space where the object actually exists; and
   an exposure amount determining unit that determines an exposure amount with which an image is captured, on the basis of the calculated position and illuminance in the space where the object actually exists.

2. The image capturing apparatus according to claim 1, further comprising:

   a storage unit that previously stores a position and an illuminance in the space where the object actually exists; and
   an illuminance distribution calculating unit that calculates an illuminance distribution in an entire monitoring area on the basis of an illuminance at a predetermined position in the space where the object actually exists, the illuminance being stored in the storage unit, and on the basis of an illuminance at the predetermined position in the space where the object actually exists, the illuminance being calculated by the calculating unit from the position and the luminance of the image of the object that is captured by the image capturing unit,
   wherein the exposure amount determining unit determines the exposure amount on the basis of the calculated illuminance distribution.

3. The image capturing apparatus according to claim 2, wherein
   the illuminance stored in the storage unit stores an illuminance that is measured from only illumination light, and
   the illuminance distribution calculating unit calculates an environment light illuminance on the basis of an illuminance at the predetermined position in the space where the object actually exists, the illuminance being measured from only the illumination light and being stored in the storage unit, and on the basis of the illuminance at the predetermined position in the space where the object actually exists, the illuminance being calculated by the calculating unit from the position and the luminance of the image of the object that is captured by the image capturing unit, and
   the illuminance distribution calculating unit calculates an illuminance distribution in the entire monitoring area, the illuminance distribution being obtained by adding the environment light illuminance to the illuminance that is measured with only the illumination light.

4. The image capturing apparatus according to claim 3, wherein, when an image cannot be captured in appropriate brightness over the entire monitoring area, the exposure amount determining unit determines the exposure amount such that an expected value of an overall rate, at which objects in the monitoring area are recognized, is the maximum from an appearing rate at each position in the monitoring area in the space where the object actually exists, and from an expected value of a rate, at which objects are recognized, with respect to each luminance of the image.

5. The image capturing apparatus according to claim 3, wherein the exposure amount determining unit determines the exposure amount such that a luminance of an object, on a screen, that is detected at a position with a highest illuminance in the monitoring area in the space where the object actually exists is an upper limit value.

6. The image capturing apparatus according to claim 3, wherein the exposure amount determining unit determines the exposure amount such that a luminance of an object, on a screen, that is detected at a position with a lowest illuminance in the monitoring area in the space where the object actually exists is a lower limit value.

7. The image capturing apparatus according to any one of claims 3 to 6, wherein the exposure amount determining unit determines the exposure amount according to an aperture of a lens.

8. The image capturing apparatus according to any one of claims 3 to 6, wherein the exposure amount determining unit determines the exposure amount according to a shutter speed.

9. The image capturing apparatus according to any one of claims 3 to 6, wherein the exposure amount determining unit determines the exposure amount according to a light-amount adjusting filter.

10. An image capturing method for detecting an object and capturing an image, the image capturing apparatus comprising:

    detecting the object;
    capturing an image of the detected object;
    calculating, on the basis of a position and a luminance that are obtained from the captured image of the object, a position and an illuminance in space where the object actually exists; and
    determining an exposure amount with which an image is captured, on the basis of the calculated position and illuminance in the space where the object actually exists.

11. An image capturing program that causes a computer to perform:

    detecting the object;
    capturing an image of the detected object;
    calculating, on the basis of a position and a luminance that are obtained from the captured image of the object, a position and an illuminance in space where the object actually exists; and
    determining an exposure amount with which an image is captured, on the basis of the calculated position and illuminance in the space where the object actually exists.

# FIG.1

# FIG.2

# FIG.3

LUMINANCE

LUMINANCE

BEFORE CONTROL

AFTER CONTROL

POSITION

POSITION

A · B

A · B

# FIG.4

IMAGE CAPTURING
APPARATUS
100

110
ILLUMINATING
DEVICE

130
IMAGE
RECOGNITION
DEVICE

VIDEO IMAGE
SIGNAL

120
VIDEO IMAGE
CAPTURING
DEVICE

OBJECT LUMINANCE,
OBJECT COORDINATES

140
CONTROL
DEVICE

CONTROL SIGNAL

# FIG.5

LUMINANCE

BEFORE CONTROL

LUMINANCE

CONTROL PROCESS

A        B POSITION

A        O        B POSITION

# FIG.6

OBJECT
LUMINANCE

OBJECT
POSITION

CONTROL DEVICE
140

COORDINATE
CONVERTING
UNIT ~141

LUMINANCE-
ILLUMINANCE
CONVERTING
UNIT ~142

ILLUMINANCE
DETECTING
UNIT ~144

ILLUMINANCE
DISTRIBUTION
STORAGE UNIT ~143

CAMERA PARAMETER
CALCULATING UNIT ~145

CONTROL
SIGNAL
OUTPUT UNIT ~146

# FIG.7

CAMERA
COORDINATE
SYSTEM

$P_G(X,Y,Z)$

$P_C(x,y)$

Z

GLOBAL
COORDINATE
SYSTEM

$O_G$

X

x

y

Y

# FIG.8

OBJECT ILLUMINANCE AT
PRESENT TIME: L(P)

ILLUMINANCE: L(X)

ILLUMINANCE ANALYSIS AT
PRESENT TIME:
$L_l(X)+Off=L_l(X)+L(P)-L_l(P)$

OFFSET OF ILLUMINANCE: $Off=L(P)-L_l(P)$

ILLUMINANCE DISTRIBUTION OF
ILLUMINATION LIGHT: $L_l(X)$
(ILLUMINANCE DISTRIBUTION
OBSERVED UNDER UNIFORM
CONDITION)

P      GLOBAL POSITION: X

# FIG.9

START

RECEIVE VIDEO SIGNALS — S101

DETERMINE IMAGE ON WHICH RECOGNITION PROCESS IS TO BE PERFORMED — S102

IDENTIFY OBJECT — S103

CALCULATE OBJECT LUMINANCE AND OBJECT POSITION — S104

OUTPUT OBJECT LUMINANCE AND OBJECT POSITION — S105

END

# FIG.10

```
START
```

CONVERT CAMERA COORDINATES OF
OBJECT POSITION TO GLOBAL
COORDINATES
— S201

DETECT ILLUMINANCE OF ILLUMINATION
LIGHT CORRESPONDING TO GLOBAL
COORDINATES OBTAINED BY
CONVERSION
— S202

CALCULATE ILLUMINATION OF
ENVIRONMENT LIGHT BY CALCULATING
DIFFERENCE BETWEEN ILLUMINANCES
— S203

CALCULATE ILLUMINATION DISTRIBUTION
AT PRESENT TIME
— S204

CALCULATE CAMERA PARAMETER
— S205

OUTPUT CAMERA PARAMETER
— S206

```
END
```

# FIG.11

# FIG.12

# FIG.13

ILLUMINATING
DEVICE

CAMERA

MONITORING AREA

# FIG.14

EP 2 211 534 A1

COMPUTER

RAM — 15

VARIOUS DATA — 15a

ROM — 16

BUS — 21

ILLUMI-NATING DEVICE — 11

VIDEO IMAGE CAPTURING DEVICE — 12

INPUT DEVICE — 13

MONITOR — 14

MEDIUM READING DEVICE — 17

INTERFACE — 18

CPU — 19

HDD — 20

VARIOUS DATA — 20a

IMAGE RECOGNITION PROCESS — 19a

IMAGE RECOGNITION PROGRAM — 20b

CAMERA PARAMETER CALCULATING PROCESS — 19b

CAMERA PARAMETER CALCULATING PROGRAM — 20c

— 10

# FIG.15

CAMERA

LICENSE PLATE

MONITORING
AREA

POINT A          POINT B

# FIG.16

VIDEO IMAGE AT POINT A

xx-xx

VIDEO IMAGE AT POINT B

xx-xx

# FIG.17

LUMINANCE                    LUMINANCE

DETECTION                    DETECTION
POSITION                     POSITION

# FIG.18

VEHICLE

CAMERA

ONCOMING
VEHICLE

# FIG.19

# FIG.20

VIDEO IMAGE AT A

VIDEO IMAGE AT B

# FIG.21

UNSUITABLE FOR
RECOGNIZING OBJECT

LUMINANCE

A    B DETECTION
POSITION

BEFORE CONTROL

LUMINANCE

A    B DETECTION
POSITION

AFTER CONTROL

# FIG.22

RECOGNITION RATE

$R_{max}$
$R_O$

$L_L$    $L_O$    $L_H$    LUMINANCE

<div align="center">

**INTERNATIONAL SEARCH REPORT**

</div>

| | International application No. |
|---|---|
| | PCT/JP2007/072384 |

A. CLASSIFICATION OF SUBJECT MATTER
*H04N5/225* (2006.01) i

According to International Patent Classification (IPC) or to both national classification and IPC

B. FIELDS SEARCHED

Minimum documentation searched (classification system followed by classification symbols)
H04N5/225

Documentation searched other than minimum documentation to the extent that such documents are included in the fields searched

| Jitsuyo Shinan Koho | 1922-1996 | Jitsuyo Shinan Toroku Koho | 1996-2008 |
|---|---|---|---|
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 5-183801 A  (Sharp Corp.),<br>23 July, 1993 (23.07.93),<br>Par. Nos. [0011], [0012]<br>(Family: none) | 1,2,10,11<br>3-9 |
| Y<br>A | JP 8-214208 A  (Fujitsu General Ltd.),<br>20 August, 1996 (20.08.96),<br>Par. No. [0004]<br>(Family: none) | 1,2,10,11<br>3-9 |
| A | JP 2004-096345 A  (Toyota Motor Corp.),<br>25 March, 2004 (25.03.04),<br>Par. Nos. [0057] to [0061]<br>& US 2004/0042683 A    & DE 010339975 A | 5 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>30 January, 2008 (30.01.08) | Date of mailing of the international search report<br>12 February, 2008 (12.02.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2007/072384 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-184272 A  (Konica Corp.),<br>30 June, 2000 (30.06.00),<br>Par. No. [0005]<br>(Family: none) | 5 |
| A | JP 10-224686 A  (Mitsubishi Electric Engineering Co., Ltd.),<br>21 August, 1998 (21.08.98),<br>Fig. 2<br>(Family: none) | 5,6 |
| A | JP 8-136968 A  (Nisca Corp.),<br>31 May, 1996 (31.05.96),<br>Fig. 11<br>(Family: none) | 7,8 |
| A | JP 2001-304832 A  (Keyence Corp.),<br>31 October, 2001 (31.10.01),<br>Par. Nos. [0005], [0006]<br>(Family: none) | 9 |
| A | JP 2002-260165 A  (Mitsubishi Heavy Industries, Ltd.),<br>13 September, 2002 (13.09.02),<br>(Family: none) | 1-11 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2706314 B
- JP 2006311031 A